# EUROPEAN PATENT APPLICATION

(11) **EP 4 615 104 A1**
(43) Date of publication of application: **10.09.2025**
(21) Application number: 23884134.0
(22) Date of filing: 15.05.2023
(51) Int. Cl.: H04W 72/0453, H04W 72/53

(54) **MULTI-OPERATOR CARRIER TRACKING METHOD AND APPARATUS FOR DISTRIBUTED ANTENNA SYSTEM**

(30) Priority: 03.11.2022 CN 202211370617
(71) Applicant: PROSE TECHNOLOGIES (SUZHOU) CO., LTD., Suzhou, Jiangsu 215345 (CN)
(72) Inventor: ZHU, Botao, Suzhou, Jiangsu 215345 (CN); XU, Renzhen, Suzhou, Jiangsu 215345 (CN); FAN, Cunxiao, Suzhou, Jiangsu 215345 (CN); WANG, Xiuping, Suzhou, Jiangsu 215345 (CN)
(74) Representative: Isarpatent
(86) International application number: PCT/CN2023/094206
(87) International publication number: WO 2024/093192

(57) **Abstract**

The present disclosure provides a multi-operator carrier tracking method and apparatus for a distributed antenna system. The method includes obtaining a carrier tracking mode of a user terminal, in response to detecting the user terminal being unable to lock onto a currently configured carrier signal, obtaining information of a next candidate carrier according to the carrier tracking mode, and re-configuring the user terminal from a current carrier to a carrier corresponding to the information of the next candidate carrier, and in response to the user terminal being unable to lock onto the configured candidate carrier signal, repeating the above process until a lockable candidate carrier is found. In the present disclosure, when the currently configured operator base station signals are detected to be abnormal, the user terminal can automatically switch to the carrier of another normal operator to ensure the continuous signal coverage and improve the user experience.

## Description

### TECHNICAL FIELD

The present disclosure generally relates to the carrier tracking technology field and, more particularly, to an operator carrier tracking method and device for a distributed antenna system.

### BACKGROUND

A Distributed Antenna System (DAS) is a mobile communication network deployed within a predefined space or building by connecting a plurality of spatially separated antenna nodes to various signal sources via a plurality of signal transmission media. The DAS can support a plurality of operators, a plurality of communication standards, and a plurality of carriers.

During the operation of a DAS, when signals of a plurality of existing operators are accessed by the system, the base station signals of some in-network operators are abnormal due to a complex and unstable network status. Thus, the stability and coverage of the signal can be affected, and user access and user experience of some online users can be affected. When the base stations of some in-network operators are abnormal, how to automatically switch users to other normal in-network operators to realize normal signal coverage needs to be solved.

### SUMMARY

The purpose of the present disclosure is to provide a multi-operator carrier tracking method and apparatus for a distributed antenna system to solve the problem of affecting network coverage when some in-network operator base station signals are abnormal.

The technical solution of the present disclosure is as follows.

A multi-operator carrier tracking method for a distributed antenna system includes:
obtaining a carrier tracking mode of a user terminal;
in response to detecting the user terminal being unable to lock onto a currently configured carrier signal, obtaining information of a next candidate carrier according to the carrier tracking mode, and re-configuring the user terminal from a current carrier to a carrier corresponding to the information of the next candidate carrier; and
in response to the user terminal being unable to lock onto the configured candidate carrier signal, repeating the above process until a lockable candidate carrier is found.

In some embodiments, the method further includes, before obtaining the information of the next candidate carrier, setting the carrier tracking mode to an automatic mode and presetting information of N carriers.

Obtaining the information of the next candidate carrier according to the carrier tracking mode includes in response to the carrier tracking mode being the automatic mode, selecting the next candidate carrier from the preset N carriers.

In some embodiments, in response to detecting the user terminal being unable to lock onto the currently configured carrier signal, obtaining the information of the next candidate carrier according to the carrier tracking mode includes:
in response to the carrier tracking mode being the automatic mode and the user terminal being detected as being unable to lock to the currently configured carrier signal, detecting signal strengths of preset N target ports, the signal strengths of the N target ports reflecting a strength of a base station pilot signal; and
in response to detecting at least one target port of the N target ports with a signal strength greater than a preset strength threshold, obtaining the information of the next candidate carrier according to the carrier tracking mode.

In some embodiments, the method further includes:
in response to detecting that the signal strengths of the N target ports are less than the preset strength threshold, continuing to detect the signal strengths of the N target ports after a first delay time, and repeating the process until at least one target port is detected with a signal strength greater than the preset strength threshold.

In some embodiments, the method further includes, before obtaining the information of the next candidate carrier, setting the carrier tracking mode to an intelligent mode.

Obtaining the information of the next candidate carrier according to the carrier tracking mode includes, in response to the carrier tracking mode being the intelligent mode, performing collection and identification on a carrier signal existing in the current space, and selecting a frequency point meeting a preset requirement according to the quality of the carrier signal as the next candidate carrier.

In some embodiments, the method further includes, in response to the carrier tracking mode being the intelligent mode and a lockable candidate carrier being found, displaying information of the locked candidate carrier.

In some embodiments, the method further includes periodically detecting whether the user terminal locks onto the currently configured carrier signal.

The present disclosure further provides a multi-operator carrier tracking apparatus for a distributed antenna system, including:
an acquisition module configured to obtain a carrier tracking mode of a user terminal;
a re-configuration module configured to, in response to detecting the user terminal being unable to lock onto a currently configured carrier signal, obtain information of a next candidate carrier according to the carrier tracking mode, and re-configure the user terminal from a current carrier to a carrier corresponding to the information of the next candidate carrier; and
a search module configured to, in response to the user terminal being unable to lock onto the configured candidate carrier signal, repeat the above process until a lockable candidate carrier is found.

In some embodiments, the apparatus further includes:
a setting module configured to set the carrier tracking mode to an automatic mode and preset information for N carriers.
The re-configuration module is further configured to, in response to the carrier tracking mode being the automatic mode, select a next candidate carrier from the preset N carriers.

In some embodiments, the apparatus further includes:
a port signal detection module configured to, in response to the carrier tracking mode being the automatic mode and the user terminal being detected as being unable to lock onto the currently configured carrier signal, detect signal strengths of preset N target ports, the signal strengths of the N target ports reflecting a strength of a base station pilot signal.
The re-configuration module is further configured to, in response to at least one target port of the N target ports being detected to have a signal strength greater than a preset strength threshold, obtain the information on the next candidate carrier according to the carrier tracking mode.

Compared to the existing technology, the multi-operator carrier tracking method and apparatus for the distributed antenna system of the present disclosure can have the following beneficial effects. In the scenario of the coverage by a plurality of operators, when some in-network operator base stations are abnormal, the user terminal can automatically track signals of other normal in-network operator base stations, and automatically switch over to realize the normal signal coverage, which ensures the user experience.

### BRIEF DESCRIPTION OF THE DRAWINGS

Embodiments are described with reference to the drawings in an easily understood method. The features, technical characteristics, advantages, and implementation methods of an operator carrier tracking method and device for a distributed antenna system are further described.
FIG. 1 is a schematic flowchart of a multi-operator carrier tracking method for a distributed antenna system according to some embodiments of the present disclosure.
FIG. 2 is a schematic flowchart of another multi-operator carrier tracking method for a distributed antenna system according to some embodiments of the present disclosure.
FIG. 3 is a schematic flowchart of another multi-operator carrier tracking method for a distributed antenna system according to some embodiments of the present disclosure.
FIG. 4 is a schematic flowchart of another multi-operator carrier tracking method for a distributed antenna system according to some embodiments of the present disclosure.
FIG. 5 is a schematic structural diagram of a multi-operator carrier tracking device for a distributed antenna system according to some embodiments of the present disclosure.
FIG. 6 is a schematic structural diagram of another multi-operator carrier tracking device for a distributed antenna system according to some embodiments of the present disclosure.
FIG. 7 is a schematic structural diagram of another multi-operator carrier tracking device for a distributed antenna system according to some embodiments of the present disclosure.

### DETAILED DESCRIPTION OF THE EMBODIMENTS

To more clearly illustrate the technical solutions of embodiments of the present disclosure or the existing technology, specific implementations of the present disclosure are described with reference to the accompanying drawings. Apparently, the accompanying drawings described below are only some embodiments of the present disclosure. Those skilled in the art can obtain other drawings and other implementations according to the accompanying drawings without creative efforts.

For simplicity, the drawings can only schematically show the components relevant to the present disclosure and do not represent the actual structure of a product. Additionally, to keep the drawings concise and easy to understand, some drawings may illustrate or mark only one component of the components with the same structure or function that exists in the drawings. In the present specification, "a" does not only mean "only one" but can also mean "more than one."

As previously mentioned, a distributed antenna system (DAS) typically supports a plurality of operators, a plurality of standards, and a plurality of carriers. However, due to the complexity of the system network status, base station signals of some in-network operators may be abnormal. To avoid affecting user experience, the present disclosure provides a carrier tracking method for the terminal side. When a user terminal detects that the currently configured carrier is not locked, other available carriers can be automatically followed. The user terminal can be re-configured to another available carrier to ensure the coverage and the user experience are unchanged.

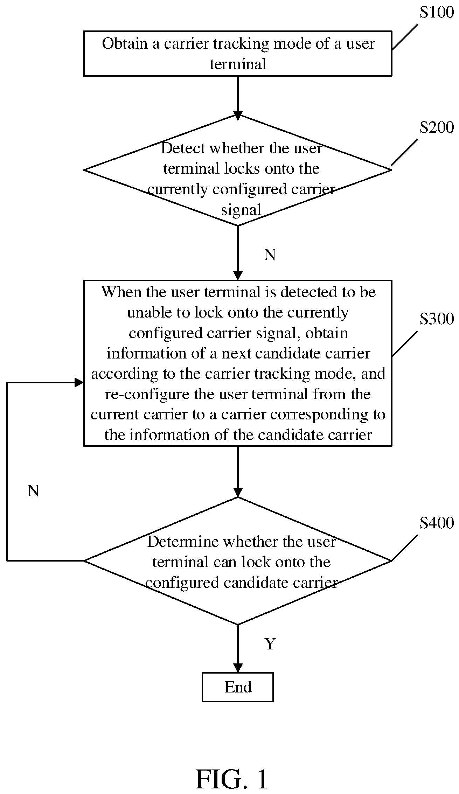

In an embodiment of the present disclosure, FIG. 1 is a schematic flowchart of an operator carrier tracking method for a distributed antenna system according to some embodiments of the present disclosure. The method includes the following steps.

At S100, a carrier tracking mode of a user terminal is obtained.

At S200, whether the user terminal locks onto the currently configured carrier signal is detected.

At S300, when the user terminal is detected to fail to lock onto the currently configured carrier signal, information of a next candidate carrier is obtained according to the carrier tracking mode, and the user terminal is re-configured from the current carrier to a carrier corresponding to the information of the candidate carrier.

At S400, whether the user terminal can lock onto the configured candidate carrier is determined. If not, return to Step S300, otherwise, carrier tracking ends.

In some embodiments, the method can be suitable in scenarios where a plurality of operators provide coverage and can be designed for the terminal side.

If a user terminal is synchronized with a base station pilot signal corresponding to a carrier, the user terminal can lock onto the carrier, that is, the user terminal is synchronized with the carrier signal. If the user terminal loses synchronization with the base station pilot signal corresponding to the carrier, the user terminal cannot lock onto the carrier, that is, the user terminal is desynchronized with the carrier signal. A process for the user terminal to find a lockable carrier can be called carrier tracking.

A carrier tracking mode can be set on the user terminal. The carrier tracking modes can include a manual mode, an automatic mode, and an intelligent mode.

In the manual mode, carrier information of only one operator may need to be set. The operator must be the operator subscribed by the user. The carrier information can include carrier frequency information and other information in different standards. For example, in a 5G TDD system, the carrier information can also include slot structure configuration information such as a slot ratio parameter.

The manual mode can be suitable for a simple network signal environment, a single-operator environment, or an environment where the user has subscribed to only one operator. In this mode, carrier tracking can be relatively simple and can only include tacking and locking onto the configured carrier. If unlock is detected, the terminal can automatically lock onto the configured carrier after the signal recovers.

In the automatic mode, information of N carriers may need to be preset. The N carriers can include different carriers of a same operator, different carriers of different operators, or a combination thereof. N > 1, and N can be set as needed. The carriers can be carriers of the operator to which the user has subscribed.

If the terminal loses synchronization with the carrier of the current operator in the automation mode, the system can try to lock onto the preset N carriers in sequence according to a preset rule. If the signal is not recovered during the first round traverse, the locking fails. Then, the second round traverse and the third round traverse can be performed until the signal of one carrier recovers. That is, locking onto one carrier is successful. For example, 4 carriers A to D can be preset. When the current carrier is carrier B, the preset rule can be polling in the order of C, D, A, B, or A, B, C, D repeatedly, as long as each carrier can be traversed. The automatic mode can be suitable for a scenario where the user has subscribed to a plurality of operators.

In the intelligent mode, the user operation can be simplest with the lowest requirement for the user. The system can automatically identify the available carrier signal existing in the current space and choose the carrier meeting the requirement as the next candidate carrier, e.g., the carrier of the operator to which the user has subscribed. The carrier signal strength may need to reach the preset requirement.

For a 5G TDD system, in addition to identifying the available carriers in the current space, the system may also need to parse the slot structure configuration information such as the slot ratio parameter of the signals in the space.

The intelligent mode can be suitable for the scenario where the network status is complex, and the user has subscribed to many operators.

In the intelligent mode, if the terminal loses synchronization with the carrier signal of the current operator, the system can determine the next candidate carrier to lock onto by automatically searching the space signals. If the candidate carrier is locked onto, the carrier tracking can end. If the candidate carrier is not locked onto, the system may search for a next candidate carrier.

Among the three modes, the manual mode can consume the least system resources and have the fastest execution speed. The intelligent mode can have a simple configuration, and the system can consume the most resources. The automatic mode can be in between. Since the carrier information of the operator has been pre-configured, the search scope can be reduced, and the terminal can quickly recover when loses locking.

Whether the configured carrier signal can be locked onto can be determined by detecting alarms related to desynchronization with the base station pilot signal or by checking the synchronization status and the desynchronization status of the base station pilot signal.

In embodiments of the present disclosure, a plurality of carrier tracking modes can be provided. The carrier tracking mode can be selected according to the actual scenario. When the user subscribes to a plurality of operators, in the automatic mode or the intelligent mode, when the current carrier is unlocked, the terminal can be switched to a lockable carrier automatically, which ensures continuous coverage and improves the user experience.

In an embodiment of the present disclosure, step S200 can include periodically detecting whether the user terminal is locked onto the currently configured carrier signal (S210).

In some embodiments, the detection method can be a polling mode. Periodic detection can reflect a desynchronization-related parameter. For example, if an alarm related to desynchronization with the base station pilot signal is detected or the synchronization-desynchronization status of the base station pilot signal is detected to be desynchronized, the user terminal can be determined to be not able to lock onto the currently configured carrier signal.

The detection method can be suitable for scenarios with low real-time requirements. For example, when the network recovers after being disconnected shortly for a few seconds, the operator may not need to be switched.

For scenarios requiring rapid lock recovery and high real-time performance, the periodic detection interval can be set to a smaller value.

In an embodiment of the present disclosure, step S300 can be modified when the user terminal fails to lock onto the currently configured carrier signal within a preset time, obtaining the next candidate carrier according to the carrier tracking mode and reconfiguring the user terminal to the carrier corresponding to the information of the next candidate carrier.

Step S400 can be correspondingly modified if the user terminal fails to lock onto the configured candidate carrier within the preset time, repeating the above process until a lockable candidate carrier is found.

Thus, the robustness of the system can be enhanced.

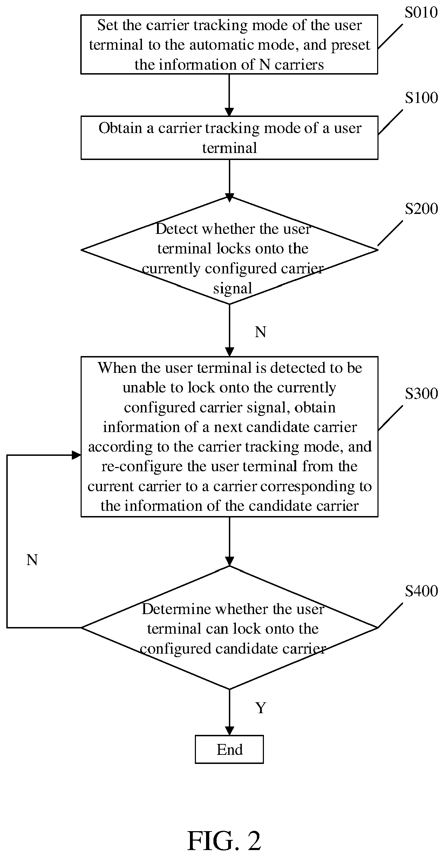

In another embodiment of the present disclosure, FIG. 2 is a schematic flowchart of another operator carrier tracking method for a distributed antenna system according to some embodiments of the present disclosure. The method includes the following steps.

At S010, the carrier tracking mode of the user terminal is set to the automatic mode, and the information of N carriers are preset.

At S100, the carrier tracking mode of the user terminal is obtained.

At S200, whether the user terminal locks onto the currently configured carrier signal is detected.

At S310, if the terminal fails to lock onto the currently configured carrier signal, and the carrier tracking mode is the automatic mode, one carrier is selected from the preset N carriers as the next candidate carrier, and the user terminal is re-configured to the next candidate carrier from the current carrier.

At S400, whether the user terminal is able to lock onto the configured candidate carrier is determined, if not, return to step S310, otherwise the carrier tracking ends.

In an embodiment of the present disclosure, step S200 includes periodically detecting whether the user terminal locks onto the currently configured carrier signal (S210).

In embodiments of the present disclosure, a basic process of the carrier tracking method in the automatic mode can be provided. Since the candidate carrier is preset, the method can solve the locking loss problem of the user terminal.

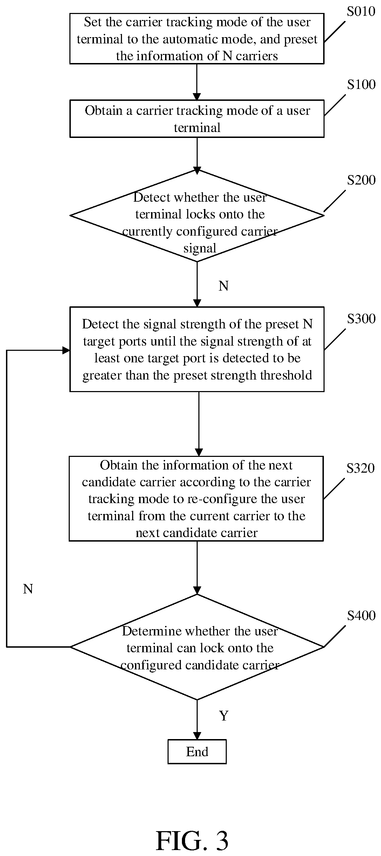

In another embodiment of the present disclosure, FIG. 3 is a schematic flowchart of another operator carrier tracking method for a distributed antenna system having a plurality of operators according to some embodiments of the present disclosure. The method includes the following steps.

At S010, the carrier tracking mode of the user terminal is set to the automatic mode, and the information of N carriers are preset.

At S100, the carrier tracking mode of the user terminal is obtained.

At S200, whether the user terminal locks onto the currently configured carrier signal is detected.

At S320, when the terminal is detected as being unable to lock onto the currently configured carrier signal, and if the carrier tracking mode is the automatic mode, the signal strength of the preset N target ports is detected. The signal strength of the N target ports reflects the strength of the base station pilot signals. If the signal strength of the N target ports is detected to be below a preset strength threshold, the signal strength of the N target ports is continuously detected after a first delay period. The process is repeated until the signal strength of at least one target port is detected to be greater than the preset strength threshold.

At S330, when the terminal is detected as being unable to lock onto the currently configured carrier signal, and at least one target port of the preset N target ports is detected to have the signal strength greater than the preset strength threshold, the information of the next candidate carrier can be obtained according to the carrier tracking mode to re-configure the user terminal from the current carrier to the next candidate carrier.

At S400, whether the user terminal is able to lock onto the configured candidate carrier is determined, if not, return to step S320, otherwise the carrier tracking ends.

In some embodiments, the target port can be an antenna port used for power detection. The signal strength of the target port can reflect the strength of the base station pilot signal. For example, in a 4T4R system, the system can include four antenna ports, which can be set as target ports, i.e., N = 4. When the terminal is detected to lose locking onto the current carrier signal, the system can enter step S320 to read the power of the 4 target ports according to the four target ports configured by the user. Compared to a threshold, if the power of the 4 target ports is smaller than the threshold, the signals of all the candidate operators can be weak or may not exist. Thus, no synchronization can be achieved. Then, the carrier may not need to be re-configured to save the resources of the device and system. The search can be continued after the first delay time (configurable). If the power of a target port is detected to be greater than the threshold, the signal can be determined, and the corresponding carrier can be re-configured.

In an embodiment, step S200 can include periodically detecting whether the user terminal locks onto the currently configured carrier signal (S210).

Embodiments of the present disclosure further provide another carrier tacking method in the automatic mode. The strength of the carrier signal can be checked by detecting the signal strength of the target port. The carrier can only be re-configured when at least one relatively strong carrier signal is detected. Thus, the resources of the device and system can be saved. The method can be suitable for the environment with frequent signal losses, such as poor network signals and damaged base stations, without affecting the performance of the device.

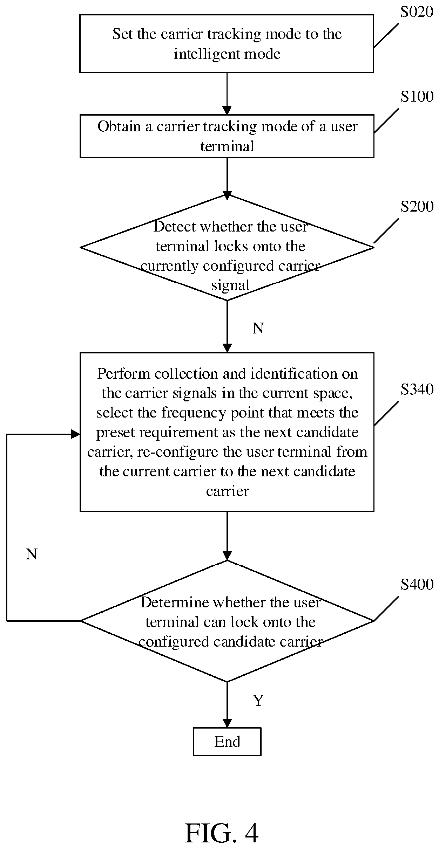

In some other embodiments of the present disclosure, FIG. 4 illustrates a multi-operator carrier tracking method for a distributed antenna system. The method includes the following steps.

At S020, the carrier tracking mode is set to the intelligent mode.

At S100, the carrier tracking mode of the user terminal is obtained.

At S200, whether the user terminal locks onto the currently configured carrier signal is detected.

At S340, when the terminal is detected as being unable to lock onto the currently configured carrier signal, and if the carrier tracking mode is the intelligent mode, the carrier signal existing in the current space can be collected and identified. The frequency point that meets the preset requirement is selected as the next candidate carrier. The user terminal is re-configured from the current carrier to the next candidate carrier.

At S400, whether the user terminal is able to lock onto the configured candidate carrier is determined, if not, return to step S340, otherwise proceed to step S500.

At S500, the information of the locked candidate carrier is displayed.

In some embodiments, in the intelligent mode, user operations can be simple. The system can automatically identify the carrier signals existing in the space and select a frequency point that meets the requirement according to the quality of the carrier signal as the candidate carrier. Of course, the candidate carrier must be the carrier of the operators subscribed by the user. The quality of the carrier signal can be rated according to the signal strength, signal stability, etc.

The carrier signal can be identified using the existing technology in the space. For example, the frequency points can be scanned to select a carrier from the carriers of the operators subscribed by the user with the signal strength greater than a first threshold and the signal stability greater than a second threshold as the candidate carrier, or select the carrier with the strongest signal strength from the carriers with the signal stability greater than the second threshold. By performing a plurality of times of scanning, the change in the signal amplitude can be analyzed. If the variance of the signal amplitude is small, the signal stability is good.

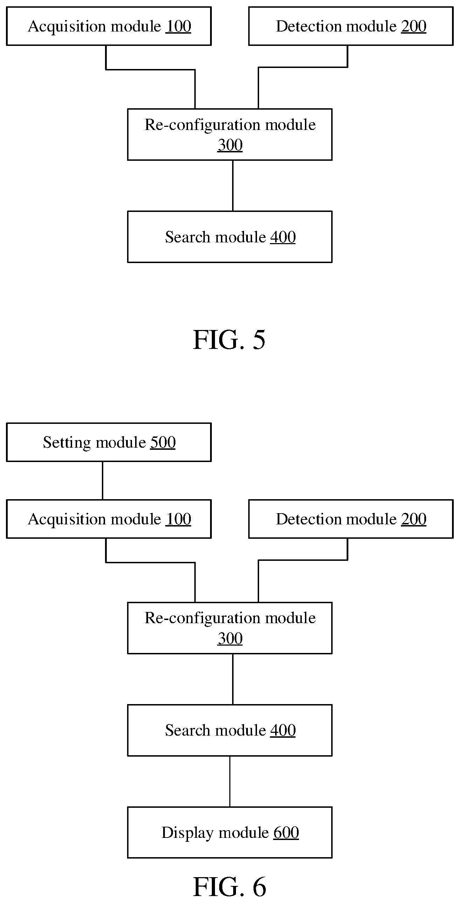

In an embodiment of the present disclosure, FIG. 5 illustrates a multi-operator carrier tracking apparatus for the distributed antenna system. The apparatus includes an acquisition module 100, a detection module 200, a re-configuration module 300, and a search module 400.

The acquisition module 100 can be configured to obtain the carrier tracking mode of the user terminal.

The detection module 200 can be configured to detect whether the user terminal locks onto the currently configured carrier signal.

The re-configuration module 300 can be configured to, when the terminal is detected as being unable to lock onto the currently configured carrier signal, obtain the information of the next candidate carrier according to the carrier tracking mode and re-configure the user terminal from the current carrier to the next candidate carrier.

The search module 400 can be configured to, if the user terminal is unable to lock onto the candidate carrier, obtain the information of the next candidate carrier and re-configure the user terminal from the current carrier to the carrier corresponding to the information of the candidate carrier, and repeat the above process until a lockable candidate carrier is found.

In an embodiment, the detection module 200 can be further configured to periodically detect whether the user terminal locks onto the currently configured carrier signal.

In another embodiment of the present disclosure, FIG. 6 illustrates a multi-operator carrier tracking apparatus for the distributed antenna system. The apparatus includes a setting module 500, an acquisition module 100, a detection module 200, a re-configuration module 300, a search module 400, and a display module 600.

The setting module 500 can be configured to set the carrier tracking mode of the user terminal to the automatic mode and to preset the information for the N carriers.

The acquisition module 100 can be configured to obtain the carrier tracking mode of the user terminal.

The detection module 200 can be configured to detect whether the user terminal locks onto the currently configured carrier signal.

The re-configuration module 300 can be configured to, when the terminal is detected as being unable to lock onto the currently configured carrier signal, select the next candidate carrier from the preset N carriers if the carrier tracking mode is the automatic mode, and re-configure the user terminal from the current carrier to the next candidate carrier.

The search module 400 can be configured to, if the user terminal is unable to lock onto the configured candidate carrier signal, obtain the information of the next candidate carrier and re-configure the user terminal from the current carrier to the carrier corresponding to the information of the next candidate carrier, and repeat the process until a lockable candidate carrier is found.

The display module 600 can be configured to display the information of the locked candidate carrier if the user terminal locks onto the configured candidate carrier signal.

In an embodiment, the detection module 200 can be further configured to periodically detect whether the user terminal locks onto the currently configured carrier signal.

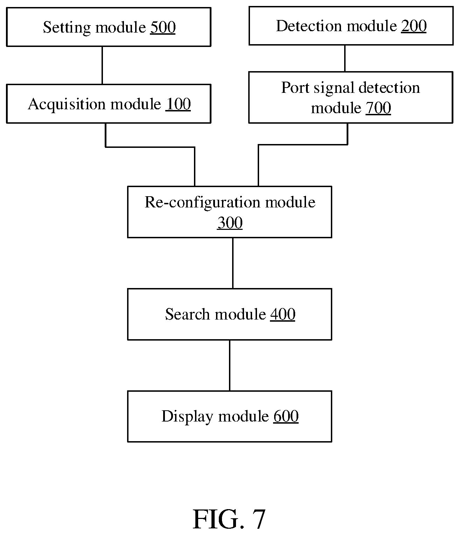

In another embodiment of the present disclosure, FIG. 7 illustrates a multi-operator carrier tracking apparatus for the distributed antenna system. The apparatus includes a setting module 500, an acquisition module 100, a detection module 200, a port signal detection module 700, a re-configuration module 300, a search module 400, and a display module 600.

The setting module 500 can be configured to set the carrier tracking mode of the user terminal to the automatic mode and to preset the information for the N carriers.

The acquisition module 100 can be configured to obtain the carrier tracking mode of the user terminal.

The detection module 200 can be configured to detect whether the user terminal locks onto the currently configured carrier signal.

The port signal detection module 700 can be configured to, if the carrier tracking mode is the automatic mode and the terminal is detected as being unable to lock onto the currently configured carrier signal, detect the signal strength of the preset N target ports, the signal strength of the N target ports reflecting the strength of the base station pilot signal, if the signal strengths of all N target ports are detected to be lower than the preset strength threshold, continue to detect the signal strength of the N target ports after the first delay time, and repeat the process until at least one target port is detected to have the signal strength greater than the preset strength threshold.

The re-configuration module 300 can be configured to, if at least one target port of the N target ports is detected to have a signal strength greater than the preset strength threshold, obtain the information of the next candidate carrier according to the carrier tracking mode, and re-configure the user terminal from the currently configured carrier to the next candidate carrier.

The search module 400 can be configured to, if the user terminal is unable to lock onto the configured candidate carrier signal, obtain the information of the next candidate carrier, re-configure the user terminal from the current carrier to the carrier corresponding to the information of the next candidate carrier, and repeating the process until a lockable candidate carrier is found.

The display module 600 can be configured to display the information of the locked candidate carrier if the user terminal locks onto the configured candidate carrier signal.

In an embodiment, the detection module 200 can be further configured to periodically detect whether the user terminal locks onto the currently configured carrier signal.

In another embodiment of the present disclosure, FIG. 6 illustrates the multi-operator carrier tracking apparatus for the distributed antenna system. The apparatus includes the setting module 500, the acquisition module 100, the detection module 200, the re-configuration module 300, the search module 400, and the display module 600.

The setting module 500 can be configured to set the carrier tracking mode of the user terminal to the automatic mode and to preset the information for the N carriers.

The acquisition module 100 can be configured to obtain the carrier tracking mode of the user terminal.

The detection module 200 can be configured to detect whether the user terminal locks onto the currently configured carrier signal.

The re-configuration module 300 can be configured to, when the terminal is detected as being unable to lock onto the currently configured carrier signal, and if the carrier tracking mode is the intelligent mode, perform collection and identification on the carrier signal existing in the current space, select the frequency point meeting the preset requirement as the next candidate carrier according to the quality of the carrier signal, and re-configure the user terminal from the current carrier to the next candidate carrier.

The search module 400 can be configured to, if the user terminal is unable to lock onto the configured candidate carrier signal, obtain the information of the next candidate carrier, re-configure the user terminal from the current carrier to the carrier corresponding to the information of the next candidate carrier, and repeat the process until a lockable candidate carrier is found.

The display module 600 can be configured to display the information of the locked candidate carrier if the user terminal locks onto the configured candidate carrier signal.

In one embodiment, the detection module 200 can be further configured to periodically detect whether the user terminal locks onto the currently configured carrier signal.

It should be noted that the embodiments of the multi-operator carrier tracking apparatus for the distributed antenna system of the present disclosure are based on the same inventive concept as the previously described embodiments of the multi-operator carrier tracking method for the distributed antenna system and can achieve the same technical effects. Therefore, for other specific details of the embodiments of the multi-operator carrier tracking apparatus, reference can be made to the previously described embodiments of the connection establishment method.

It should be further noted that the above embodiments can be freely combined as needed. The above description is only some embodiments of the present disclosure. For those skilled in the art, various modifications and refinements can be made without departing from the principles of the present disclosure. These modifications and refinements shall also be within the scope of the present disclosure.

## Claims

1. A multi-operator carrier tracking method for a distributed antenna system, comprising:
obtaining a carrier tracking mode of a user terminal;
in response to detecting the user terminal being unable to lock onto a currently configured carrier signal, obtaining information of a next candidate carrier according to the carrier tracking mode, and re-configuring the user terminal from a current carrier to a carrier corresponding to the information of the next candidate carrier; and
in response to the user terminal being unable to lock onto the configured candidate carrier signal, repeating the above process until a lockable candidate carrier is found.

2. The multi-operator carrier tracking method for the distributed antenna system according to claim 1, further comprising, before obtaining the information of the next candidate carrier:
setting the carrier tracking mode to an automatic mode and presetting information of N carriers,
wherein obtaining the information of the next candidate carrier according to the carrier tracking mode includes:
in response to the carrier tracking mode being the automatic mode, selecting the next candidate carrier from the preset N carriers.

3. The multi-operator carrier tracking method for the distributed antenna system according to claim 2, wherein in response to detecting the user terminal being unable to lock onto the currently configured carrier signal, obtaining the information of the next candidate carrier according to the carrier tracking mode includes:
in response to the carrier tracking mode being the automatic mode and the user terminal being detected as being unable to lock to the currently configured carrier signal, detecting signal strengths of preset N target ports, the signal strengths of the N target ports reflecting a strength of a base station pilot signal; and
in response to detecting at least one target port of the N target ports with a signal strength greater than a preset strength threshold, obtaining the information of the next candidate carrier according to the carrier tracking mode.

4. The multi-operator carrier tracking method for the distributed antenna system according to claim 3, further comprising:
in response to detecting that the signal strengths of the N target ports are less than the preset strength threshold, continuing to detect the signal strengths of the N target ports after a first delay time, and repeating the process until at least one target port is detected with a signal strength greater than the preset strength threshold.

5. The multi-operator carrier tracking method for the distributed antenna system according to claim 1, further comprising, before obtaining the information of the next candidate carrier:
setting the carrier tracking mode to an intelligent mode;
wherein obtaining the information of the next candidate carrier according to the carrier tracking mode includes:
in response to the carrier tracking mode being the intelligent mode, performing collection and identification on a carrier signal existing in the current space, and selecting a frequency point meeting a preset requirement according to a quality of the carrier signal as the next candidate carrier.

6. The multi-operator carrier tracking method for the distributed antenna system according to claim 5, further comprising:
in response to the carrier tracking mode being the intelligent mode and a lockable candidate carrier being found, displaying information of the locked candidate carrier.

7. The multi-operator carrier tracking method for the distributed antenna system according to claim 1, further comprising:
periodically detecting whether the user terminal locks onto the currently configured carrier signal.

8. A multi-operator carrier tracking apparatus for a distributed antenna system, comprising:
an acquisition module configured to obtain a carrier tracking mode of a user terminal;
a re-configuration module configured to, in response to detecting the user terminal being unable to lock onto a currently configured carrier signal, obtain information of a next candidate carrier according to the carrier tracking mode, and re-configure the user terminal from a current carrier to a carrier corresponding to the information of the next candidate carrier; and
a search module configured to in response to the user terminal being unable to lock onto the configured candidate carrier signal, repeat the above process until a lockable candidate carrier is found.

9. The multi-operator carrier tracking device for the distributed antenna system according to claim 8, further comprising:
a setting module configured to set the carrier tracking mode to an automatic mode and preset information for N carriers,
wherein the re-configuration module is further configured to, in response to the carrier tracking mode being the automatic mode, select a next candidate carrier from the preset N carriers.

10. The multi-operator carrier tracking device for the distributed antenna system according to claim 9, further comprising:
a port signal detection module configured to, in response to the carrier tracking mode being the automatic mode and the user terminal being detected as being unable to lock onto the currently configured carrier signal, detect signal strengths of preset N target ports, the signal strengths of the N target ports reflecting a strength of a base station pilot signal;
wherein the re-configuration module is further configured to, in response to at least one target port of the N target ports being detected to have a signal strength greater than a preset strength threshold, obtain the information on the next candidate carrier according to the carrier tracking mode.
